# EUROPEAN PATENT APPLICATION

(11) **EP 4 730 516 A1**
(43) Date of publication of application: **22.04.2026**
(21) Application number: 25205443.2
(22) Date of filing: 29.09.2025
(51) Int. Cl.: H01M 50/213, H01M 50/507, H01M 50/516

(54) **BATTERY CELL HOLDER AND BATTERY PACK**

(30) Priority: 15.10.2024 KR 20240140748
(71) Applicant: SAMSUNG SDI CO., LTD., Yongin-si, Gyeonggi-do 17084 (KR)
(72) Inventor: PARK, Sanghun, 17084 Yongin-si (KR); CHOI, Seunglim, 17084 Yongin-si (KR)
(74) Representative: Marks & Clerk LLP

(57) **Abstract**

A battery cell holder for containing a plurality of battery cells is provided. The battery cell holder includes a lower holder that includes a cell placement groove in which the battery cells may be placed. An electrode tap shaped to connect to electrode terminals of the battery cells is provided in the battery cell holder. and the battery cell holder also includes an upper holder configured to cover the plurality of battery cells in the lower holder, with the upper holder including terminal holes that expose electrode terminals of the battery cells and a tap placement groove corresponding to a shape of the electrode tap, and with the electrode tap positioned in the tap placement groove of the upper holder.

## Description

### BACKGROUND

### Field of the Invention

The present disclosure relates to a battery cell holder and a battery pack, and more particularly, to a battery cell holder where a tap placement groove for placing a patterned electrode tap is formed, and to a battery pack including the battery cell holder.

### Discussion of the Related Art

Unlike primary batteries that are not designed to be charged, secondary batteries can be discharged and recharged. Low-capacity secondary batteries are used in small portable electronic devices, such as smart phones, feature phones, notebook computers, digital cameras, and camcorders. Large-capacity secondary batteries are widely used as power sources for driving motors, such as in hybrid vehicles or electric vehicles, and for power storage. A secondary battery includes an electrode assembly that comprises a positive electrode and a negative electrode, a case that accommodates the electrode assembly, and a terminal part connected to the electrode assembly.

In battery packs configured with a secondary battery, a desired power system is secured by connecting a plurality of battery cells to each other. Welding is generally used to effect power connection for high current and sensing in a battery pack. In the related art, electrode taps are manufactured with a plate, and a welding portion is configured in a bending shape. But in a case where the welding portion of the electrode tap is bent in an upward direction of an electrode terminal, there may be a problem that inefficiency in a height direction occurs.

The information disclosed in this section is for enhancement of understanding of the background of the present disclosure and may contain information that does not constitute related (or prior) art.

### SUMMARY

An aspect of the present disclosure is directed to providing a battery cell holder where a tap placement groove for placing a patterned electrode tap is formed and a battery pack including the battery cell holder.

However, the technical problem to be solved by the present disclosure is not limited to the above-described problems, and other problems not mentioned herein, and aspects and features of the present disclosure that would address such problems, will be clearly understood by those skilled in the art from the descriptions below.

A battery cell holder according to an embodiment of the present disclosure may be a battery cell holder for containing a plurality of battery cells therein and may include: a lower holder including a cell placement groove in which the battery cells may be placed; an electrode tap shaped to connect to electrode terminals of the battery cells; and an upper holder configured to cover the plurality of battery cells provided in the lower holder, the upper holder including terminal holes that expose electrode terminals of the battery cells and a tap placement groove corresponding to a shape of the electrode tap, the electrode tap being positioned in the tap placement groove of the upper holder.

In an embodiment, the upper holder may include welding holes configured to expose portions of the battery cells to thereby enable welding of the electrode tap to the battery cells.

In an embodiment, the upper holder may include protrusions protruding upward from a peripheries of the terminal holes, the protrusions being configured to prevent contact between electrode terminals of the battery cells exposed through the terminal holes and an adjacent part of the electrode tap.

In an embodiment, the terminal holes are circular, and the protrusions at the peripheries of the terminal holes are arc shaped to correspond to the circular shapes of the terminal holes.

In an embodiment, the upper holder may include a protrusion formed in the tap placement groove and protruding upward to align the electrode tap.

In an embodiment, the protrusion may have a rectilinear shape.

In an embodiment, the electrode tap may include a portion bent in a shape corresponding to the protrusion and coupled to the protrusion.

In an embodiment, the terminal holes may include positive terminal holes for exposing positive terminals of the battery cells and negative terminal holes for exposing negative terminal of the battery cells.

In an embodiment, the electrode tap may be coupled to a protection circuit module (PCM) for controlling the battery cells.

A battery pack according to an embodiment of the present disclosure may include a plurality of battery cell holders, wherein each of the battery cell holders contains a plurality of battery cells, and wherein each of the plurality of battery cell holders includes: a lower holder including a cell placement groove in which the battery cells contained by the lower holder are placed; an electrode tap connected to electrode terminals of the battery cells contained by the lower holder; and an upper holder covering the plurality of battery cells provided in the lower holder, the upper holder including terminal holes that expose electrode terminals of the battery cells contained in the lower holder and a tap placement groove corresponding to a shape of the electrode tap, with the electrode tap being positioned in the tap placement groove of the upper holder.

In an embodiment, each of the upper holders may include welding holes formed to expose portions of the battery cells to thereby enable welding of the electrode tap to the battery cells.

In an embodiment, each of the upper holders may include protrusions protruding upward from peripheries of the terminal holes, the protrusions preventing contact between electrode terminals of the battery cells exposed through the terminal holes and an adjacent part of the electrode tap.

In an embodiment, the terminal holes are circular and the protrusions at the peripheries of the terminal holes are arc shaped to correspond to circular shapes of the terminal holes.

In an embodiment, each of the upper holders may include a protrusion formed in the tap placement groove and protruding upward to align the electrode tap.

In an embodiment, the protrusion may have a rectilinear shape.

In an embodiment, the electrode tap may include a portion bent in a shape corresponding to the protrusion and coupled to the protrusion.

In an embodiment, the terminal holes may include: positive terminal holes exposing positive terminals of the battery cells and negative terminal holes exposing negative terminals of the battery cells.

In an embodiment, each of the battery cell holders may further include a protection circuit module (PCM) coupled to the electrode tap to control the battery cells.

In an embodiment, the PCM may have a shape corresponding to a portion of the electrode tap.

In an embodiment, in each of the battery cell holders a potting agent is formed along the tap placement groove with the electrode tap placed in the upper holder.

According to an embodiment of the present disclosure, a tap placement groove for placing a patterned electrode tap may be formed, and, thus, the electrode tap does not need to be bent in an upward direction, thereby providing for more efficient use of space in a height direction.

According to an embodiment of the present disclosure, an open portion of an upper holder may be minimized, and a protrusion for preventing a contact when placing the electrode tap at a periphery of the open portion may be formed, thereby preventing short circuits between electrodes.

According to an embodiment of the present disclosure, welding holes may be formed in the upper holder, and thus, a welding portion may be patterned, thereby facilitating the automated manufacturing of a secondary battery.

According to an embodiment of the present disclosure, potting may be performed by coating a potting agent along the tap placement groove when the electrode tap is placed in the upper holder, and thus, it is easy to form a potting structure.

At least some of the above and other features of the invention are set out in the claims.

However, aspects and features of the present disclosure are not limited to those described above, and other aspects and features not mentioned will be clearly understood by a person skilled in the art from the detailed description below.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain principles of the disclosure.
FIG. 1A is an upper perspective view of a cylindrical secondary battery;
FIG. 1B is a cross-sectional view of a cylindrical secondary battery;
FIG. 2A is an exploded perspective view of a battery pack including a battery cell holder according to an embodiment of the present disclosure;
FIG. 2B is a view of a battery pack including a battery cell holder according to an embodiment of the present disclosure;
FIG. 3 illustrates in detail an upper holder of a battery cell holder according to an embodiment of the present disclosure; and
FIG. 4 illustrates in detail a shape where an upper holder and an electrode tap of a battery cell holder according to an embodiment of the present disclosure are coupled to each other.

### DETAILED DESCRIPTION OF THE INVENTION

Example embodiments of the present disclosure will be described below in detail with reference to the accompanying drawings. It is noted that the terms or words used in this specification and claims should not be construed as being limited to common or dictionary meanings but instead should be understood to have meanings and concepts in agreement with the scope of the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Examples of secondary batteries include a coin type, a cylindrical type, a prismatic type, and a pouch type. The present disclosure is basically applicable to a prismatic secondary battery. Therefore, the cylindrical secondary battery will first be briefly described prior to description of embodiments of the present disclosure.

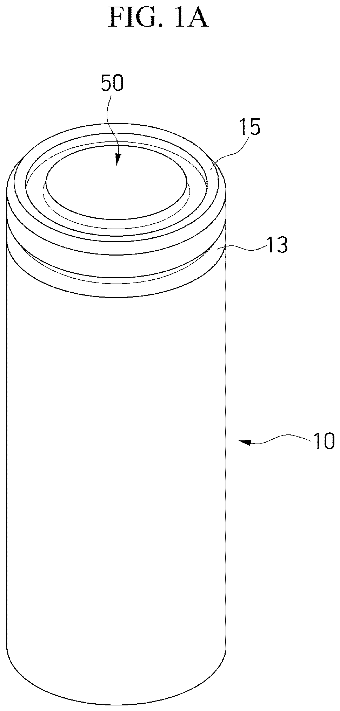

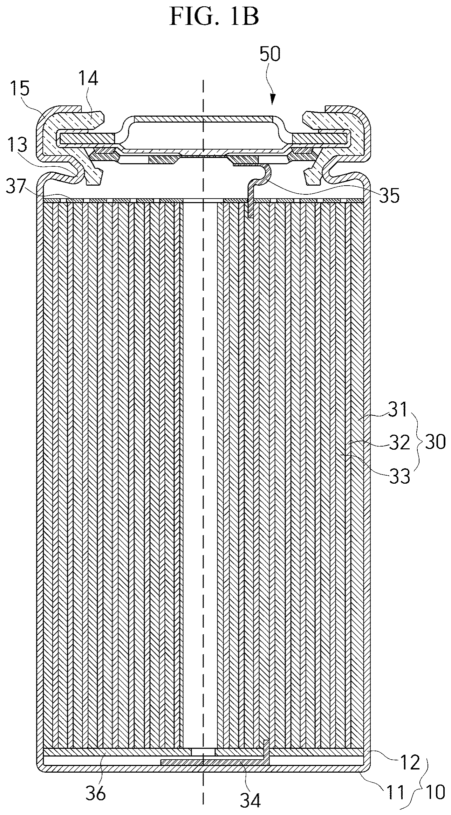

FIG. 1A is an upper perspective view of a cylindrical secondary battery. FIG. 1B is a cross-sectional view the cylindrical secondary battery.

Referring to FIGS. 1A and 1B, the cylindrical secondary battery may include an electrode assembly 30, and a case 10 that accommodates the electrode assembly 30 and an electrolyte. A cap assembly 50 is connected to an opening of the case 10 and seals the case 10. An insulating plate 37 is disposed between the electrode assembly 30 and the cap assembly 50 within the case 10.

The electrode assembly 30 may include a first electrode 33 and a second electrode 31 with a separator 32 interposed between the electrodes 31 and 33. The electrode assembly 30 may be wound in a jelly-roll form.

The first electrode 33 may include a first base and a first active material layer disposed on the first base. A first lead tap 35 may be extended from a first uncoated part of the first base that does not include the first active material layer. The first lead tap 35 may be electrically connected to the cap assembly 50.

The second electrode 31 may include a second base and a second active material layer disposed on the second base. A second lead tap 34 may be extended from a second uncoated part of the second base that does not include the second active material layer. The second lead tap 34 may be electrically connected to the case 10. The first lead tap 35 and the second lead tap 34 may be extended in opposite directions.

The first electrode 33 may function as a positive electrode. In such a case, the first base may be, for example, aluminum foil. The first active material layer may include, for example, a transition metal oxide. The second electrode 31 may function as a negative electrode. In such a case, the second base may be, for example, copper foil or nickel foil. The second active material layer may include, for example, graphite.

The separator 32 functions to permit movement of lithium ions and to prevent short-circuit between the first electrode 33 and the second electrode 31. The separator 32 may be formed from, for example, a polyethylene film, a polypropylene film, or a polyethylene-polypropylene film. The case 10 may accommodate the electrode assembly 30 and an electrolyte, and the case 10 forms an external form of the battery along with the cap assembly 50. The case 10 may include a body part 12 having an approximate cylindrical shape and a bottom part 11 connected to one side of the body part 12. A beading part 13 that is deformed toward the inside of the body part 12 may be disposed in the body part 12. A crimping part 15 that is bent toward the inside of the body part 12 may be disposed at an end of the body part 12 on the open side.

The beading part 13 may suppress a movement of the electrode assembly 30 within the case 10 and the beading part 13 may facilitate the settlement of a gasket 14 and the cap assembly 50. The crimping part 15 may firmly fix the cap assembly 50 by pressurizing an edge of the cap assembly 50 through the gasket 14. The case 10 may be made of, for example, iron plated with nickel.

The cap assembly 50 may seal the case 10 by being fixed to the inside of the crimping part 15 through the gasket 14. The cap assembly 50 may include an upper cap part, a safety vent, a lower cap part, an insulating member, and a sub-plate. But the present disclosure is not limited to such examples. The cap assembly 50 may be variously deformed.

The upper cap part may be disposed at the top of the cap assembly 50. The upper cap part may include a terminal part that is protrudes upwardly in a convex manner and is connected to an external circuit. An output for discharging a gas around the terminal part may be disposed in the upper cap part.

The safety vent may be disposed under the upper cap part. The safety vent may include a protruding part that protrudes downward in a convex manner and is connected to the sub-plate. At least one notch may be disposed around the protruding part. When a gas is generated in the secondary battery due to, for example, overcharging or an abnormal operation, the protruding part may be deformed upward by the pressure of the gas and become separated from the sub-plate. Further, the safety vent may open along the notch. Thus, the cut safety vent can prevent an explosion of the secondary battery by discharging gas to outside of the secondary battery.

The lower cap part may be disposed under the safety vent. A first opening for exposing the protruding part of the safety vent and a second opening for discharging a gas may be disposed in the lower cap part. The insulating member may be disposed between the safety vent and the lower cap part, and the insulating member may insulate the safety vent and the cap-down part.

The sub-plate may be disposed under the lower cap part. The sub-plate may be fixed to the bottom of the lower cap part to close the first opening of the lower cap part. The protruding part of the safety vent may be fixed to the sub-plate. The first lead tap 35 that extends from the electrode assembly 30 may be fixed to the sub-plate. Accordingly, the upper cap part, the safety vent, the lower cap part, and the sub-plate may be electrically connected to the first electrode 33 of the electrode assembly 30.

The insulating plate 37 may be positioned to the electrode assembly 30 under the beading part 13. A tap opening may be formed in the insulating plate with the first lead tap 35 extending through the tap opening. The cap assembly 50 that is electrically connected to the first electrode 33 by the first lead tap 35 may face the electrode assembly 30 with the insulating plate 37 interposed therebetween. The cap assembly 50 may maintain the state in which the cap assembly 50 is insulated from the electrode assembly 30 by the insulating plate 37. The cylindrical secondary battery may include another insulating plate 36 for insulation between the electrode assembly 30 and the bottom part 11 of the case 10.

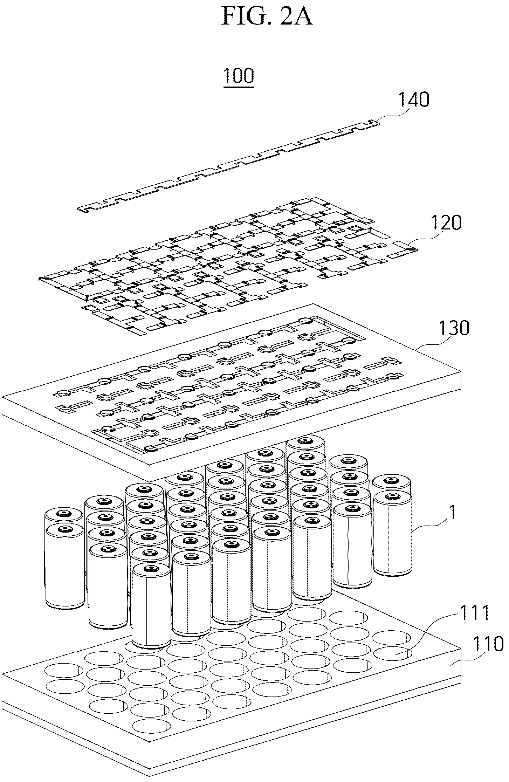

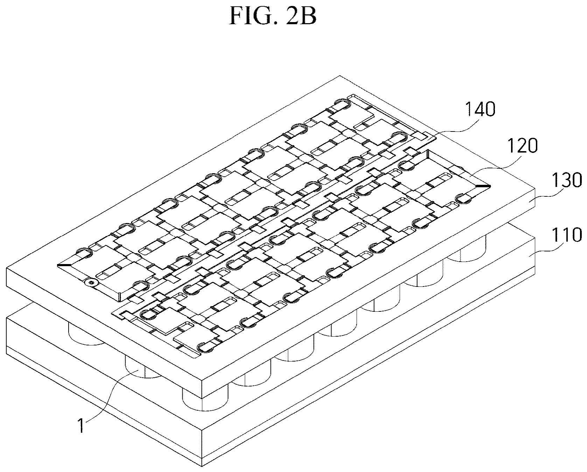

FIG. 2A is an exploded perspective view of a battery pack including a battery cell holder according to an embodiment of the present disclosure, and FIG. 2B is a coupling view of a battery pack including a battery cell holder according to an embodiment of the present disclosure.

Referring to FIGS. 2A and 2B, the battery cell holder according to an embodiment of the present disclosure may include a lower holder 110, an electrode tap 120, and an upper holder 130. A battery pack 100 including the battery cell holder according to an embodiment of the present disclosure may further include a protection circuit module (PCM) 140 for controlling a plurality of battery cells 1. The plurality of battery cells 1 provided in the battery cell holder according to an embodiment of the present disclosure may each be a large-diameter battery cell where a positive electrode and a negative electrode extend in an upward direction.

A cell placement groove 111 where the plurality of battery cells 1 are placed may be formed in the lower holder 110. The cell placement groove 111 may be formed in a shape corresponding to a size and a shape of each of the plurality of battery cells 1. Thus, when the battery cells 1 are placed in the lower holder 110, the battery cells 1 may fixed in the lower holder 110.

The electrode tap 120 may have a pattern shape where electrode terminals of the plurality of battery cells 1 are connected to each other. Thus, when the electrode tap 120 is placed in the upper holder 130 (described below), the electrode terminals of the plurality of battery cells 1 may be connected to each other.

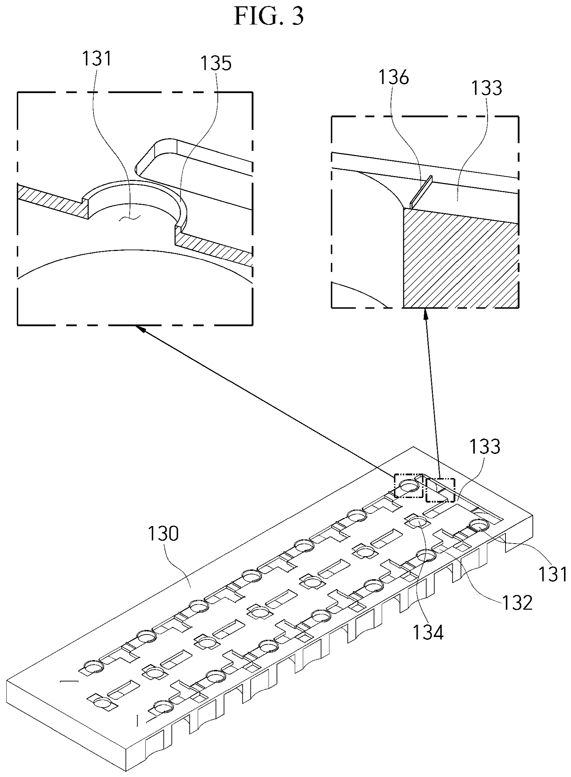

The upper holder 130 may cover the plurality of battery cells 1 provided in the lower holder 110. Hereinafter, a detailed configuration of the upper holder 130 of the battery cell holder according to an embodiment of the present disclosure will be described with reference to FIG. 3.

FIG. 3 is a diagram illustrating in detail the upper holder 130 of the battery cell holder according to an embodiment of the present disclosure. The upper holder 130 may include terminal holes 131 and 132 through which electrode terminals of the plurality of battery cells 1 are exposed and a tap placement groove 133 corresponding to the shape of the electrode tap 120. Thus, the electrode tap 120 may be placed in the upper holder 120. Fixing grooves (not shown) that are formed to correspond to sizes and shapes of the plurality of battery cells 1 and fix the plurality of battery cells 1 may be formed in a lower portion of the upper holder 130.

In an embodiment, the terminal holes 131 and 132 may include positive terminal holes 131 for exposing positive terminals and negative terminal holes 132 for exposing a negative terminals of battery cells. The plurality of battery cells 1 positioned in the battery cell holder may each be a large-diameter battery cell where the positive terminal and the negative terminal face an upward direction. Thus, each positive terminal hole 131 and each negative terminal hole 132 included in the upper holder 130 and may be electrically connected to each other through the electrode tap 120 placed in the upper holder 130.

In an embodiment, a welding hole 134 provided in the upper holder 130 for welding the electrode tap 1 is formed by exposing a portion of each of the plurality of battery cells 1. After the electrode tap 120 is placed in the upper holder 130, welding may be performed through the terminal holes 131 and 132 and the welding hole 134 so that the electrode tap 120 is fixed to the upper holder 130.

The upper holder 130 may include a first protrusion 135 that protrudes upward at a periphery of the terminal hole 131 to prevent a contact between an electrode terminal exposed through the terminal hole 131 and an adjacent electrode tap 120. In FIG. 3, the first protrusion 135 formed at a periphery of the positive electrode hole 131 is illustrated, and the first protrusion 135 may be formed at a periphery of the negative terminal hole 132. In the embodiment of FIG. 3, the terminal hole 131 may have a circular shape corresponding to a shape of a positive terminal of the battery cell 1, and the first protrusion 135 at a periphery of the terminal hole 131 may have an arc shape corresponding to a circular shape of the terminal hole 131.

The upper holder 130 may include a second protrusion 136 that is formed in the tap placement groove to protrude upward so as to align the electrode tap 120. In the embodiment of FIG. 3, the second protrusion 136 may have a rectilinear shape. The second protrusion 136 may allow the electrode tap 120 and the upper holder 130 to be coupled to each other. Hereinafter, a method of coupling the electrode tap 120 and the upper holder 130 of the battery cell holder according to an embodiment of the present disclosure will be described in detail.

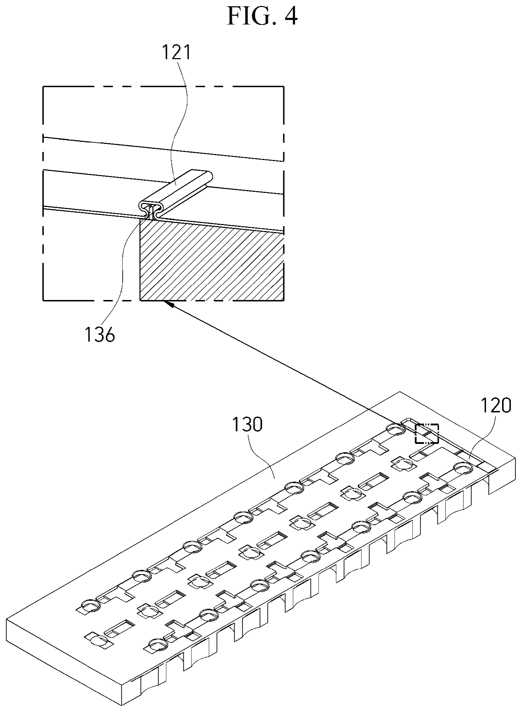

FIG. 4 illustrates in detail a shape where the upper holder 130 and the electrode tap 120 of the battery cell holder are coupled to each other.

Referring to FIG. 4, the electrode tap 120 may include a bending portion 121 that is bent in a shape corresponding to the second protrusion 136 and is coupled to the second protrusion 136. In the embodiment of FIG. 4, the bending portion 121 may be bent into a rectilinear shape of the second protrusion 136. As illustrated in FIG. 4, the bending portion 121 of the electrode tap 120 and the second protrusion 136 of the upper holder 130 may be fitted and coupled to each other. Thus, the electrode tap 120 may be placed on the upper holder 130, and, at the same time, the electrode tap 120 may be aligned with and coupled to the terminal holes 131 and 132 and the welding hole 134.

Referring again to FIG. 2A, the PCM 140 may be coupled to the electrode tap 120. The PCM 140 may provide control during an abnormal operation state such as the over-charge, over-discharge, or overcurrent of each of the plurality of battery cells 1 included in the battery pack 100. The PCM 140 may have a shape corresponding to a portion of the electrode tap 120. The PCM 140 may be coupled to the electrode tap 120 and may be supplied with power from the plurality of battery cells 1.

The battery pack 100 including the battery cell holder according to an embodiment of the present disclosure has been described. Potting may be performed in the battery pack 100 to protect an electrical connection between the battery cell 1 and the electrode tap 120 of the battery pack 100. For example, potting may be performed by coating a potting agent along the tap placement groove 133 in a state where the electrode tap 120 is placed on the upper holder 130.

According to embodiments of the present disclosure, the tap placement groove 133 for placing the patterned electrode tap 120 is formed. Thus, it is not necessary to bend the electrode tap in an upward direction, thereby making effective use of the area in the height direction.

According to embodiments of the present disclosure, an open portion of the upper holder 130 is minimized. Further, protrusions are formed to prevent contact with the electrode tap 120 placed at a periphery of the opening portion, thereby preventing short circuits between electrodes.

According to embodiments of the present disclosure, the welding hole 134 is formed in the upper holder 130. Thus, a welding portion may be patterned to facilitate automation of manufacturing of a secondary battery.

According to embodiments of the present disclosure, potting may be performed by coating a potting agent along the tap placement groove 133 after the electrode tap 120 is placed in the upper holder 130,. Thus, it is easy to form a potting structure.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one or more of complex oxides of metal, selected among cobalt, manganese, nickel, and a combinations thereof, and lithium may be used as the positive electrode active material.

The complex oxide may be lithium transition metal complex oxide. Examples of the complex oxide include lithium nickel-based oxide, lithium cobalt-based oxide, lithium manganese-based oxide, a lithium ferrous phosphate-based compound, cobalt-free nickel-manganese-based oxide, or combinations of these compounds. For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these chemical formulas, A may be Ni, Co, Mn, or a combination of thereof; X may be Al, Ni, Co, Mn, Cr, Fe, Mg, Sr, V, a rare earth element, or a combination thereof; D may be O, F, S, P, or combinations thereof; G may be Al, Cr, Mn, Fe, Mg, La, Ce, Sr, V, or a combination of thereof; and L¹ may be Mn, Al, or a combination thereof.

A positive electrode for a lithium secondary battery may include a current collector and a positive electrode active material layer formed on the current collector. The positive electrode active material layer may include the positive electrode active material and may further include a binder and/or a conductive material.

The amount of the positive electrode active material may be 90 wt.% to 99.5 wt.% with respect to 100 wt.% of the positive electrode active material layer. The amount of the binder and the conductive material may be 0.5 wt.% to 5 wt.% with respect to 100 wt.% of the positive electrode active material layer.

Aluminum may be used as the current collector. But the present disclosure is not limited thereto.

A negative electrode active material may include a material capable of reversible intercalation/de-intercalation of lithium ions, lithium metal, an alloy of lithium metal, a material capable of doping and dedoping with respect to lithium, or transition metal oxide. The material capable of reversible intercalation/de-intercalation of lithium ions may include a carbon-based negative electrode active material such as crystalline carbon, amorphous carbon, or combinations thereof. An example of the crystalline carbon is graphite, such as natural graphite or synthetic graphite. Examples of the amorphous carbon include soft or hard carbon, mesophase pitch carbide, and fired coke.

An Si-based negative electrode active material or an Sn-based negative electrode active material may be used as the material capable of doping and dedoping of lithium. The Si-based negative electrode active material may be silicon, a silicon-carbon composite, SiOₓ (0<x<2), a Si-based alloy, or a combination of them. The silicon-carbon composite may be a composite of silicon and amorphous carbon. According to one example, the silicon-carbon composite includes silicon particles and amorphous carbon coated on surfaces of silicon particles. The silicon-carbon composite may further include crystalline carbon. For example, the silicon-carbon composite may include a core including crystalline carbon and silicon particles, and an amorphous carbon coating layer may be disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

The negative electrode active material layer may include, for example 90 wt.% to 99 wt.% of the negative electrode active material, 0.5 wt.% to 5 wt.% of the binder, and 0 wt.% to 5 wt.% of the conductive material.

A nonaqueous-based binder, an aqueous-based binder, a dry binder, or a combination of them may be used as the binder. If the aqueous-based binder is used, the binder may further include a cellulose-series compound capable of assigning viscosity.

One of nickel foil, stainless steel foil, titanium foil, nickel foam, copper foam, a polymer base on which a conductive metal has been coated, and a combination of these may be used as a current collector for the negative electrode.

An electrolyte for a lithium secondary battery may include a nonaqueous organic solvent and lithium salts. The nonaqueous organic solvent may be a medium through which ions that are involved in an electrochemical reaction of a battery move. The nonaqueous organic solvent may be a carbonate-based, ester-based, ether-based, ketone-based, or alcohol-based solvent, an aprotic solvent, or a combination of these. The carbonate-based, ester-based, ether-based, ketone-based, or alcohol-based solvent, or the aprotic solvent may be used solely, or more than one of these may be mixed and used as the nonaqueous organic solvent. Further, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of these examples may be used as the separator.

The separator may include a porous base and a coating layer including an organic matter, an inorganic matter, or a combination of organic and inorganic that is disposed on one or both sides of the porous base. The organic matter may include a polyvinylidene fluoride-based heavy antibody or (meth)acrylic polymer. The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. The organic matter and the inorganic matter may have a form in which the organic matter and the inorganic matter are mixed in one coating layer or a form in which a first coating layer including the organic matter and a second coating layer including the inorganic matter are stacked.

Although the present disclosure has been described above in connection with embodiments and drawings, the present disclosure is not limited to the embodiments. A person having ordinary knowledge in the art to which the present disclosure pertains may modify and change the present disclosure within the technical scope of the present disclosure.

## Claims

1. A battery cell holder for containing a plurality of battery cells therein, the battery cell holder comprising:
a lower holder including a cell placement groove in which the battery cells may be placed;
an electrode tap shaped to connect electrode terminals of the battery cells; and
an upper holder configured to cover the plurality of battery cells provided in the lower holder, the upper holder including terminal holes that expose electrode terminals of the battery cells and a tap placement groove corresponding to a shape of the electrode tap,
wherein the electrode tap is positioned in the tap placement groove of the upper holder.

2. The battery cell holder of claim 1, wherein the upper holder comprises welding holes to expose portions of the battery cells to thereby enable welding of the electrode tap to the battery cells.

3. The battery cell holder of claim 1 or 2, wherein the upper holder comprises protrusions protruding upward from peripheries of the terminal holes, the protrusions being configured to prevent contact between electrode terminals of the battery cells exposed through the terminal holes and an adjacent part of the electrode tap.

4. The battery cell holder of claim 3, wherein the terminal holes are circular and the protrusions at the peripheries of the terminal holes are arc shaped to correspond to the circular shapes of the terminal holes.

5. The battery cell holder of any preceding claim, wherein the upper holder comprises a protrusion formed in the tap placement groove and protruding upward to align the electrode tap.

6. The battery cell holder of claim 5, wherein the protrusion formed in the tap placement groove has a rectilinear shape.

7. The battery cell holder of claim 5 or 6, wherein the electrode tap comprises a portion bent in a shape corresponding to the protrusion formed in the tap placement groove and coupled to the protrusion.

8. The battery cell holder of any preceding claim, wherein the terminal holes comprise positive terminal holes for exposing positive terminals of the battery cells and negative terminal holes for exposing negative terminals of the battery cells.

9. The battery cell holder of any preceding claim, wherein the electrode tap is coupled to a protection circuit module for controlling the battery cells.

10. A battery pack comprising:
a plurality of battery cell holders as claimed in any preceding claim,
wherein each of the battery cell holders contains a plurality of battery cells, and
wherein in each of the battery cell holders:
in the lower holder the battery cells are placed in the cell placement groove;
the electrode tap is connected to electrode terminals of the battery cells contained by the lower holder; and
the upper holder covers the plurality of battery cells provided in the lower holder, and the terminal holes of the upper holder expose electrode terminals of the battery cells contained in the lower holder.

11. The battery pack of claim 10, wherein each of the upper holders comprises welding holes formed to expose portions of the battery cells to thereby enable welding of the electrode tap to the battery cells.

12. The battery pack of claim 10 or 11, wherein each of the upper holders comprises protrusions protruding upward from peripheries of the terminal holes, the protrusions preventing contact between electrode terminals of the battery cells exposed through the terminal holes and an adjacent part of the electrode tap, and optionally
wherein the terminal holes are circular and the protrusions at the peripheries of the terminal holes are arc shaped to correspond to circular shapes of the terminal holes.

13. The battery pack of claim 10, 11 or 12, wherein each of the upper holders comprises a protrusion formed in the tap placement groove and protruding upward to align the electrode tap, and optionally
wherein the protrusion formed in the tap placement groove has a rectilinear shape, and/or
wherein the electrode tap comprises a portion bent in a shape corresponding to the protrusion formed in the tap placement groove and coupled to the protrusion.

14. The battery pack of any one of claims 10 to 13, wherein the terminal holes comprise
positive terminal holes exposing positive terminals of the battery cells and negative terminal holes exposing negative terminals of the battery cells.

15. The battery pack of any one of claims 10 to 14, wherein each of the battery cell holders further comprises a protection circuit module coupled to the electrode tap to control the battery cells, and optionally
wherein the protection circuit module has a shape corresponding to a portion of the electrode tap, and optionally
wherein, in each of the battery cell holders a potting agent is formed along the tap placement groove with the electrode tap placed in the upper holder.
